# EUROPEAN PATENT APPLICATION

(11) **EP 3 385 947 A1**
(43) Date of publication of application: **10.10.2018**
(21) Application number: 16869503.9
(22) Date of filing: 04.03.2016
(51) Int. Cl.: G10L 17/14, G10L 17/04, H04M 1/725

(54) **METHOD REALIZING VOICE WAKE-UP, DEVICE, TERMINAL, AND COMPUTER STORAGE MEDIUM**

(30) Priority: 30.11.2015 CN 201510859545
(71) Applicant: ZTE Corporation, Shenzhen, Guangdong 518057 (CN)
(72) Inventor: LIU, Ruhu, Shenzhen Guangdong 518057 (CN); LIU, Pan, Shenzhen Guangdong 518057 (CN)
(74) Representative: Lavoix
(86) International application number: PCT/CN2016/075627
(87) International publication number: WO 2017/092189

(57) **Abstract**

The invention relates to the field of intelligent terminals, and in particular, to a method realizing voice wake-up, a device, a terminal, and a computer storage medium. The method realizing voice wake-up is applicable to an intelligent terminal and comprises: receiving a voice wake-up command input by a user; performing, according to a predefined voice wake-up word, wake-up word identification on the voice wake-up command to determine a first determination result, wherein the predefined voice wake-up word comprises voiceprint information; performing, according to the voice wake-up word, voice print determination on the voice wake-up command to determine a second determination result; and when both the first determination result and the second determination result meet ta predefined condition, unlocking and waking up the intelligent terminal. The technical solution according to the invention can simplify a procedure for a user to wake up and control the intelligent terminal.

## Description

### TECHNICAL FIELD

The disclosure relates to the field of intelligent terminals, and particularly to a method and device for implementing voice wake-up, a terminal and a computer storage medium.

### BACKGROUND

In an existing intelligent terminal, voice waking up and voiceprint encrypting are performed respectively by two independent and different hardware modules. During a voice wake-up training, a wake-up word recorded successfully is set directly into a voice chip; and during a voiceprint training, a wake-up word recorded successfully is stored to Application Processor (AP) side. The voice wake-up training recording and the voiceprint training recording are performed separately and there is no relation therebetween.

When an intelligent terminal is used, a voice wake-up is performed firstly using a wake-up word; in a voiceprint encryption state, further voiceprint verification also needs to be performed, and manipulation of the intelligent terminal through voice commands can be implemented only after success of the voiceprint verification.

In the above implementation method, the wake-up training and voiceprint training are two independent processes. When the voice wake-up and voiceprint unlocking are set with different voice commands, the user needs to remember two wake-up words that may confuse the user or may be forgotten easily; when the voice wake up and voiceprint unlocking are set with a same voice command, then a number of times of repeated recordings tends to be high, which brings a bad user experience. On the other hand, since voice wake-up and voiceprint unlocking need to be separately performed when the intelligent terminal is used, there is a certain possibility of false wake-up due to the fact that the wake-up word of the voice wake-up is not subjected to special voiceprint verification.

### SUMMARY

The technical problem to be solved by embodiments of the disclosure is to provide a method and device for implementing voice wake-up, a terminal and a computer storage medium, which can simplify a process for a user to wake up and manipulate the intelligent terminal.

In order to solve the technical problem, technical solutions provided by the embodiments of the disclosure are as follows.

According to an aspect of the embodiments of the disclosure, a method for implementing voice wake-up is provided, which is applied to an intelligent terminal, the method includes that:
a voice wake-up instruction input by a user is received;
wake-up word identification and determination are performed on the voice wake-up instruction using a preset voice wake-up word to obtain a first determination result, the voice wake-up word including voiceprint information;
voiceprint determination is performed on the voice wake-up instruction using the voice wake-up word to obtain a second determination result; and
the intelligent terminal is unlocked and waked up when the first determination result and the second determination result meet preset conditions.

In the above solution, before the voice wake-up instruction input by the user is received, a unity training recording of the voice wake-up word including the voiceprint information is performed and the voice wake-up word is stored.

In the above solution, before the unity training recording of the voice wake-up word including the voiceprint information is performed,
noise in an environment in which the unity training recording is performed is detected, and
the operation that the unity training recording of the voice wake-up word including the voiceprint information is performed may specifically include that:
the unity training recording of the voice wake-up word including the voiceprint information is performed when a volume of the noise is lower than a preset decibel value.

In the above solution, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the voiceprint training recording is successful reaches n, and a number of times that the wake-up word training recording is successful is zero, the unity training recording is restarted; or when a number of times that the wake-up word training recording is successful reaches m, and a number of times that the voiceprint training recording is successful is zero, the unity training recording is restarted, where m and n are respectively an integer greater than one.

In the above solution, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the wake-up word training recording is successful reaches m, and a number of times that the voiceprint training recording is successful is less then n, wake-up word training recording data is saved, the wake-up word training recording is stopped, and the voiceprint training recording is performed continually; voiceprint training recording data is saved when the number of times that the voiceprint training recording is successful reaches n, and the unity training recording is finished, where m and n are respectively an integer greater than one.

In the above solution, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the voiceprint training recording is successful reaches n, and a number of times that the wake-up word training recording is successful is less than m, voiceprint training recording data is saved, the voiceprint training recording is stopped, and the wake-up word training recording is performed continually; wake-up word training recording data is saved when the number of times that the wake-up word training recording is successful reaches m, and the unity training recording is finished, where m and n are respectively an integer greater than one.

In the above solution, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
a number of times that both the wake-up word training recording and the voiceprint training recording are simultaneously successful are recorded; wake-up word training recording data and voiceprint training recording data are saved when the number of times that both the wake-up word training recording and the voiceprint training recording are simultaneously successful reaches m, and the unity training recording is finished, where m is an integer greater than one.

According to another aspect of the embodiments of the disclosure, a device for implementing voice wake-up is provided, the device includes that:
a receiving module, arranged to receive a voice wake-up instruction input by a user;
a determining module, arranged to perform wake-up word identification and determination on the voice wake-up instruction using a preset voice wake-up word to obtain a first determination result, the voice wake-up word including voiceprint information, and perform voiceprint determination on the voice wake-up instruction using the voice wake-up word to obtain a second determination result; and
a processing module, arranged to unlock and wake up the intelligent terminal when the first determination result and the second determination result meet preset conditions.

In the above solution, the device may further include that:
a recording training module, arranged to perform a unity training recording of the voice wake-up word including the voiceprint information; and
a voice chip, arranged to store the voice wake-up word.

In the above solution, the device may further include that:
a recording processing module, arranged to detect noise in an environment in which the unity training recording is performed before performing the unity training recording of the voice wake-up word including the voiceprint information;
the recording training module may be specifically arranged to perform the unity training recording of the voice wake-up word including the voiceprint information when a volume of the noise is lower than a preset decibel value.

In the above solution, the recording training module may include that:
a concurrent recording sub-module, arranged to, during the unity training recording, control a left channel of the intelligent terminal to store wake-up word training recording data and control a right channel of the intelligent terminal to store voiceprint training recording data; or control a right channel of the intelligent terminal to store wake-up word training recording data and control a left channel of the intelligent terminal to store voiceprint training recording data.

When processing is performed, the receiving module, the determining module, the processing module, the recording training module, the recording processing module and the concurrent recording sub-module may be implemented using a Central Processing Unit (CPU), a Digital Signal Processor (DSP), or a Field-Programmable Gate Array (FPGA).

According to yet another aspect of the embodiments of the disclosure, an intelligent terminal is provided; the intelligent terminal includes the device for implementing voice wake-up described above.

According to still another aspect of the embodiments of the disclosure, a computer storage medium having stored thereon computer instructions for executing the method for implementing voice wake-up according to the embodiments of the disclosure is provided.

The embodiments of the disclosure have the following beneficial effects.

The method for implementing voice wake-up according to the embodiments of the disclosure includes that: a voice wake-up instruction input by a user is received, wake-up word identification and determination are performed on the voice wake-up instruction using a preset voice wake-up word to obtain a first determination result, the voice wake-up word including voiceprint information; voiceprint determination is performed on the voice wake-up instruction using the voice wake-up word to obtain a second determination result; and the intelligent terminal is unlocked and waked up when the first determination result and the second determination result meet preset conditions. With the embodiments of the disclosure, the original two operations can be simplified into one operation, thus it is possible to eliminate the operation of voiceprint unlocking after the intelligent terminal is waked up, which operation is a necessity before a user can use the intelligent terminal, thereby simplifying a process for the user to wake up and manipulate the intelligent terminal.

### BRIEF DESCRIPTION OF DRAWINGS

FIG. 1 is a schematic diagram of training recording according to the related art.
FIG. 2 is a schematic diagram of a unity training recording according to an embodiment of the disclosure.
FIG. 3 is a schematic diagram of waking up and voiceprint unlocking of an intelligent terminal according to the related art.
FIG. 4 is a schematic diagram of waking up and voiceprint unlocking of the intelligent terminal according to an embodiment of the disclosure.
FIG. 5 is a schematic structural diagram of a device for implementing voice wake-up according to an embodiment of the disclosure.
FIG. 6 is a schematic diagram of a unity training recording according to a fourth embodiment of the disclosure.
FIG. 7 is a schematic diagram of a unity training recording according to the fourth embodiment of the disclosure.

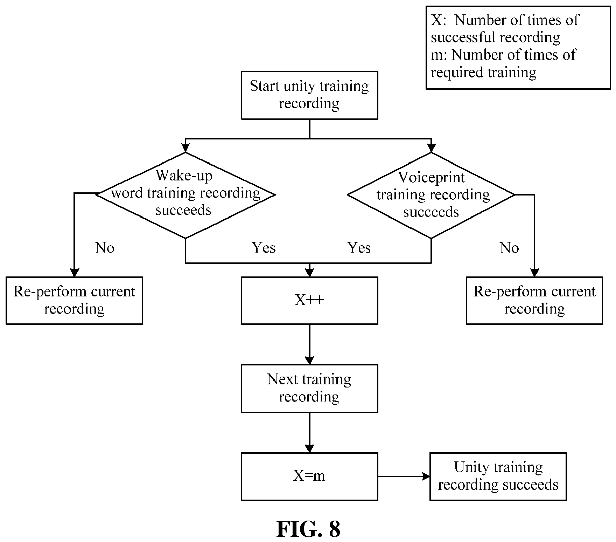

FIG. 8 is a schematic diagram of a unity training recording according to a fifth embodiment of the disclosure.

### DETAILED DESCRIPTION

In order to make the technical problem to be solved by the embodiments of the present disclosure, technical solutions and advantages provided by the embodiments of the present disclosure more clear, the following detailed descriptions will be given with reference to the accompanying drawings and the specific embodiments.

Aiming at the problem that tedious operations for a user due to a fact that voice wakeup and voiceprint unlocking are separately performed in the related art, embodiments of the present disclosure provide a method and device for implementing voice wake-up and a terminal, which can simplify a process for a user to wake up and manipulate the intelligent terminal.

### First embodiment

According to the embodiment, a method for implementing voice wake-up is provided, which is applied to an intelligent terminal, the method includes that:
a voice wake-up instruction input by a user is received;
wake-up word identification and determination are performed on the voice wake-up instruction using a preset voice wake-up word to obtain a first determination result, the voice wake-up word including voiceprint information;
voiceprint determination is performed on the voice wake-up instruction using the voice wake-up word to obtain a second determination result; and
the intelligent terminal is unlocked and waked up when the first determination result and the second determination result meet preset conditions.

In this embodiment, a voice wake-up instruction input by a user is received; both wake-up word identification and determination and voiceprint determination are performed simultaneously on the voice wake-up instruction using a preset voice wake-up word, and the intelligent terminal is unlocked and waked up when determination results meet preset conditions. The technical solutions of the present disclosure can simplify the original two operations into one operation, thus it is possible to eliminate the operation of voiceprint unlocking after the intelligent terminal is waked up, which operation is a necessity before a user can use the intelligent terminal, thereby simplifying the process for the user to wake up and manipulate the intelligent terminal.

According to an embodiment of the present disclosure, the method may further include that: before the voice wake-up instruction input by the user is received, a unity training recording of the voice wake-up word including the voiceprint information is performed and the voice wake-up word is stored.

According to an embodiment of the present disclosure, the method may further include that: before the unity training recording of the voice wake-up word including the voiceprint information is performed,
noise in an environment in which the unity training recording is performed is detected, and
the operation that the unity training recording of the voice wake-up word including the voiceprint information is performed may specifically include that:
the unity training recording of the voice wake-up word including the voiceprint information is performed when a volume of the noise is lower than a preset decibel value.

According to an embodiment of the present disclosure, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the voiceprint training recording is successful reaches n, and a number of times that the wake-up word training recording is successful is zero, the unity training recording is restarted; or when a number of times that the wake-up word training recording is successful reaches m, and a number of times that the voiceprint training recording is successful is zero, the unity training recording is restarted, where m and n are respectively an integer greater than one.

According to an embodiment of the present disclosure, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the wake-up word training recording is successful reaches m, and a number of times that the voiceprint training recording is successful is less then n, wake-up word training recording data is saved, the wake-up word training recording is stopped, and the voiceprint training recording is performed continually; voiceprint training recording data is saved when the number of times that the voiceprint training recording is successful reaches n, and the unity training recording is finished, where m and n are respectively an integer greater than one.

According to an embodiment of the present disclosure, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
when a number of times that the voiceprint training recording is successful reaches n, and a number of times that the wake-up word training recording is successful is less than m, voiceprint training recording data is saved, the voiceprint training recording is stopped, and the wake-up word training recording is performed continually; wake-up word training recording data is saved when the number of times that the wake-up word training recording is successful reaches m, and the unity training recording is finished, where m and n are respectively an integer greater than one.

According to an embodiment of the present disclosure, the operation that the unity training recording of the voice wake-up word including the voiceprint information is performed may include that:
a wake-up word training recording of the voice wake-up word and a voiceprint training recording of the voice wake-up word are performed simultaneously, and recording results are determined separately; and
a number of times that both the wake-up word training recording and the voiceprint training recording are simultaneously successful are recorded; wake-up word training recording data and voiceprint training recording data are saved when the number of times that both the wake-up word training recording and the voiceprint training recording are simultaneously successful reaches m, and the unity training recording is finished, where m is an integer greater than one.

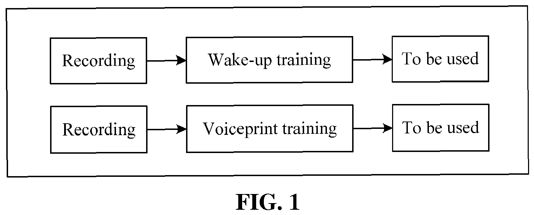

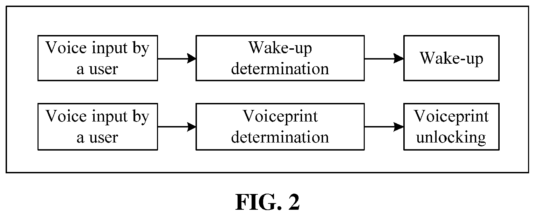

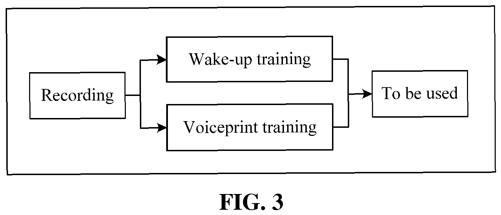

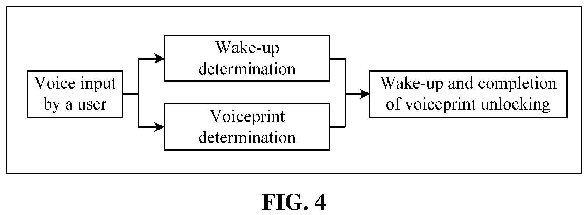

As illustrated in FIG.1, in the related art, during a training recording, wake-up word training recording and voiceprint training recording are performed separately; and as illustrated in FIG.3, during the intelligent terminal is operated, waking up and voiceprint unlocking are also performed separately. In contrast, as illustrated in FIG.2, according to the embodiments of the present disclosure, during a training recording, wake-up word training recording and voiceprint training recording are performed simultaneously; and as illustrated in FIG.4, during the intelligent terminal is operated, waking up and voiceprint unlocking are also performed simultaneously.

### Second embodiment

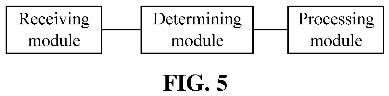

According to the embodiment, a device for implementing voice wake-up is provided, as illustrated in FIG.5, the embodiment includes that:
a receiving module, arranged to receive a voice wake-up instruction input by a user;
a determining module, arranged to perform wake-up word identification and determination on the voice wake-up instruction using a preset voice wake-up word to obtain a first determination result, the voice wake-up word including voiceprint information, and perform voiceprint determination on the voice wake-up instruction using the voice wake-up word to obtain a second determination result; and
a processing module, arranged to unlock and wake up the intelligent terminal when the first determination result and the second determination result meet preset conditions.

According to an embodiment of the present disclosure, the device may further include that:
a recording training module, arranged to perform a unity training recording of the voice wake-up word including the voiceprint information; and
a voice chip, arranged to store the voice wake-up word.

According to the embodiment, voice wake-up instruction input by a user is received; both wake-up word identification and determination and voiceprint determination are performed simultaneously on the voice wake-up instruction using a preset voice wake-up word, and the intelligent terminal is unlocked and waked up when determination results meet preset conditions. The technical solutions of the present disclosure can simplify the original two operations into one operation, thus it is possible to eliminate the operation of voiceprint unlocking after the intelligent terminal is waked up, which operation is a necessity before a user can use the intelligent terminal, thereby simplifying the process for the user to wake up and manipulate the intelligent terminal.

According to an embodiment of the present disclosure, the device may further include that:
a recording processing module, arranged to detect noise in an environment in which the unity training recording is performed before performing the unity training recording;
the recording training module is specifically arranged to perform the unity training recording of the voice wake-up word including the voiceprint information when a volume of the noise is lower than a preset decibel value.
The recording training module can control recording result of each recording and determine whether the recording is successful and whether enter a next recording.

The noise in an environment in which the unity training recording is performed is detected by the recording processing module before performing the unity training recording and during the unity training recording, the determination on Signal to Noise Ratio (SNR) is enhanced by the recording processing module appropriately, so as to improve data quality of the cording training module, and thus the success rate of the identification is increased.

According to an embodiment of the present disclosure, the recording training module may include that:
a concurrent recording sub-module, arranged to, during the unity training recording, control a left channel of the intelligent terminal to store wake-up word training recording data and control a right channel of the intelligent terminal to store voiceprint training recording data; or control a right channel of the intelligent terminal to store wake-up word training recording data and control a left channel of the intelligent terminal to store voiceprint training recording data.

### Third embodiment

According to the embodiment, an intelligent terminal is provided, which includes the device for implementing voice wake-up described above.

According to the intelligent terminal in the embodiment, voice wake-up instruction input by a user is received; both wake-up word identification and determination and voiceprint determination are performed simultaneously on the voice wake-up instruction using a preset voice wake-up word, and the intelligent terminal is unlocked and waked up when determination results meet preset conditions. The technical solutions of the present disclosure can simplify the original two operations into one operation, thus it is possible to eliminate the operation of voiceprint unlocking after the intelligent terminal is waked up, which operation is a necessity before a user can use the intelligent terminal, thereby simplifying the process for the user to wake up and manipulate the intelligent terminal.

The method for implementing voice wake-up implemented by the intelligent terminal may specifically include that:
In a first operation: a unity training recording of the voice wake-up word carrying the voiceprint information is performed before the intelligent terminal is used by a user;
In a second operation: a safety lock screen of the intelligent terminal is set; In a third operation: the intelligent terminal is in a normal working state, such as, off screen or standby;
In a fourth operation: a wake word is spoken out by the user, and then wake-up word identification and determination and voiceprint determination are performed, and responses directly to the user to operate and control the intelligent terminal when both of the determinations meet conditions; otherwise, an error is displayed.

### Fourth embodiment

According to embodiment, the method for implementing voice wake-up includes that:
In a first operation: noise in an environment in which a unity training recording is performed is detected firstly before performing the unity training recording, when the current environment meets a recording condition, then the unity training recording is performed continually; otherwise, recording needs to be performed in a quiet environment is displayed. Criteria for condition judgment are determined according to empirical values obtained from tests under different environmental conditions.

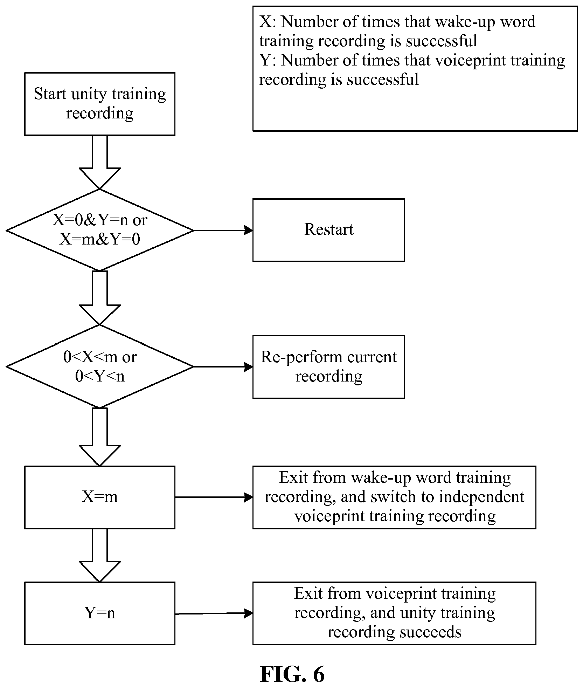

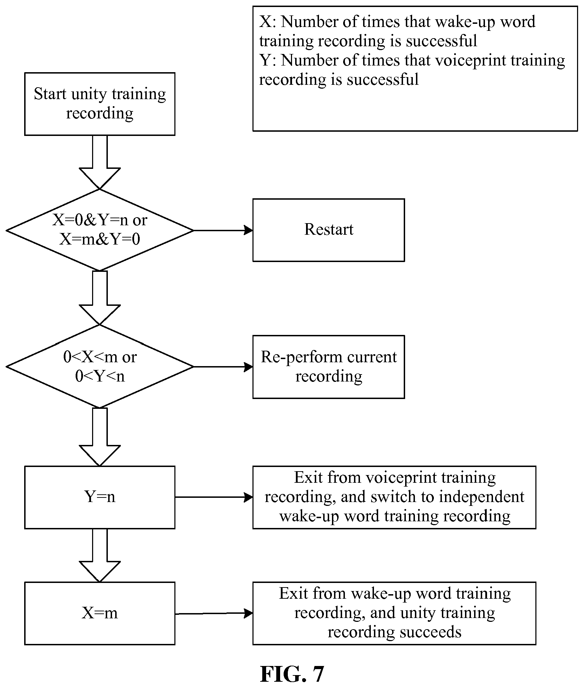

In a second operation: during the unity training recording, assume that a number of times that the wake-up word training recording is successful must reach m, and a number of times that the voiceprint training recording is successful must reach n, the principle of the unity training recording is that: if either the wake-up word or the voiceprint is recorded successfully, the successful one will exit the unity training recording firstly, and the unsuccessful one will perform the unity training recording independently. The basic flow of the unity training recording is as follows:
2.1) when the number of times that the voiceprint training recording is successful reaches n, and the number of times that the wake-up word training recording is successful is zero, the unity training recording is restarted; or when a number of times that the wake-up word training recording is successful reaches m, and a number of times that the voiceprint training recording is successful is zero, the unity training recording is restarted, where m and n are respectively an integer greater than one.
2.2) As illustrated in FIG.6, when the number of times that the wake-up word training recording is successful reaches m, and the number of times that the voiceprint training recording is successful is less then n, then wake-up word training recording data is saved, the wake-up word training recording is stopped, and the voiceprint training recording is performed continually; voiceprint training recording data is saved when the number of times that the voiceprint training recording is successful reaches n, and the unity training recording is finished, where m and n are respectively an integer greater than one.
2.3) As illustrated in FIG.7, when the number of times that the voiceprint training recording is successful reaches n, and the number of times that the wake-up word training recording is successful is less than m, then voiceprint training recording data is saved, the voiceprint training recording is stopped, and the wake-up word training recording is performed continually; wake-up word training recording data is saved when the number of times that the wake-up word training recording is successful reaches m, and the unity training recording is finished, where m and n are respectively an integer greater than one.
2.4) During the wake-up word training recording or the voiceprint training recording, the wake-up word is processed by a corresponding wake-up voice chip, the voiceprint is processed by a corresponding voiceprint engine, and thus there may be a timing difference between the wake-up word processing performed by the corresponding wake-up voice chip and the voiceprint processing performed by the corresponding voiceprint engine. In the present disclosure, for each unity training recording, processing manners for different timing problems between the wake-up word training recording and the voiceprint training recording are illustrated in table 1 below.

**Table 1**

| Wake-up word training recording | voiceprint training recording | Processing manner |
|---|---|---|
| Finished | Finished | The next unity training recording will be performed when at least the wake-up word training recording or the voiceprint training recording is successful, or an error is displayed when both the wake-up word training recording and voiceprint training recording fail |
| Finished | Not finished | A delay message is sent, and the next unity training recording will not be performed until a voiceprint training recording result is obtained |
| Not finished | Finished | It is determined whether the wake-up word training recording is finished, and a next unity training recording will be performed after the wake-up word training recording is finished |
| Not finished | Not finished | Normal cycle waiting |

In a third operation: each time the unity training recording is performed, the intelligent terminal is switched to a corresponding unity route, both the left channel and the right channel are adopted simultaneously and used to store wake-up word training recording data and voiceprint training recording data respectively. The intelligent terminal is switched to an independent recording route when a training recording is performed independently; the left channel is adopted to store current recording data.

In a fourth operation: after the unity training recording is successful, the wake-up word training recording data is stored to the voice chip and the voiceprint training recording data is stored on the AP side, and the intelligent terminal enters a standby state immediately.

In a fifth operation: a awake word is spoken out by the user, and then wake-up word identification and determination and voiceprint determination are performed, and responses directly to the user to operate and control the intelligent terminal when both of the determinations meet conditions; otherwise, an error is displayed.

In this embodiment, a safety lock screen mode is set after the wake-up word training recording is finished by the user. In an off screen state or a standby state, the wake-up word is spoken out, the wake-up word identification and determination and the voiceprint determination are performed by the intelligent terminal, and when the two determinations meet conditions, responses directly to the user to perform a voice operation. According to the method, a way in which the intelligent terminal is waked up and operated and controlled by the user is simplified.

### Fifth embodiment

According to embodiment, the method for implementing voice wake-up includes that:
In a first operation: noise in an environment in which a unity training recording is performed is detected firstly before performing the unity training recording, when the current environment meets a recording condition, then the unity training recording is performed continually; otherwise, recording needs to be performed in a quiet environment is displayed. Criteria for condition judgment are determined according to empirical values obtained from tests under different environmental conditions.

In a second operation: during the unity training recording, assume that a number of times that the wake-up word training recording is successful must reach m, and a number of times that the voiceprint training recording is successful must reach n, the principle of the unity training recording is that: if either the wake-up word or the voiceprint is recorded successfully, the successful one will exit the unity training recording firstly, and the unsuccessful one will perform the unity training recording independently. The basic flow of the unity training recording is as follows:
the wake-up word training recording of the voice wake-up word and the voiceprint training recording of the voice wake-up word are performed simultaneously, and recording results are determined separately;
a number of times that both the wake-up word training recording and the voiceprint training recording are simultaneously successful are recorded; wake-up word training recording data and voiceprint training recording data are saved when the number of times that both the wake-up word training recording and the voiceprint training recording are simultaneously successful reaches m, and the unity training recording is finished, where m is an integer greater than one.

During the wake-up word training recording or the voiceprint training recording, the wake-up word is processed by a corresponding wake-up voice chip, the voiceprint is processed by a corresponding voiceprint engine, and thus there may be a timing difference between the wake-up word processing performed by the corresponding wake-up voice chip and the voiceprint processing performed by the corresponding voiceprint engine. In the present disclosure, for each unity training recording, processing manners for different timing problems between the wake-up word training recording and the voiceprint training recording is illustrated in table 1.

In a third operation: each time the unity training recording is performed, the intelligent terminal is switched to a corresponding unity route, both the left channel and the right channel are adopted simultaneously and used to store wake-up word training recording data and voiceprint training recording data respectively. The intelligent terminal is switched to an independent recording route when a training recording is performed independently; the left channel is adopted to store current recording data.

In a fourth operation: after the unity training recording is successful, the wake-up word training recording data is stored to the voice chip and the voiceprint training recording data is stored on the AP side, and the intelligent terminal enters a standby state immediately.

In a fifth operation: a awake word is spoken out by the user, and then wake-up word identification and determination and voiceprint determination are performed, and responses directly to the user to operate and control the intelligent terminal when both of the determinations meet conditions; otherwise, an error is displayed.

In this embodiment, a safety lock screen mode is set after the wake-up word training recording is finished by the user. In an off screen state or a standby state, the wake-up word is spoken out, the wake-up word identification and determination and the voiceprint determination are performed by the intelligent terminal, and when the two determinations meet conditions, responses directly to the user to perform a voice operation. According to the method, a way in which the intelligent terminal is waked up and operated and controlled by the user is simplified.

According to the embodiments of the disclosure, a computer storage medium having stored thereon computer instructions for executing the method for implementing voice wake-up according to the embodiments of the disclosure is provided.

Many of the functional components described in this specification are referred to as modules to more particularly emphasize the independence of their implementation.

In embodiments of the present disclosure, modules may be implemented in software so as to be executed by various types of processors. For example, an identified executable code module may include one or more physical or logical blocks of computer instructions, which may be constructed as objects, procedures, or functions, for example. Nonetheless, the executable code of the identified modules need not be physically located together, but may include different instructions stored in different physics. When the instructions are logically combined together, they constitute the module and achieve the prescribed purpose of the module.

In fact, the executable code module may be a single instruction or multiple instructions, and may even be distributed over multiple different code segments, distributed among different programs, and distributed across multiple memory devices. As such, operational data may be identified within a module and may be implemented in any suitable form and organized within any suitable type of data structure. The operational data may be collected as a single data set, or may be distributed at different locations (included on different storage devices) and may at least partially exist on the system or network as electronic signals only.

When the module can be implemented using software, taking into account the level of the existing hardware technology, the modules that can be implemented by software can be built by the technicians in the field without considering the cost and the corresponding hardware circuit can be implemented by the technicians in the field. The hardware circuits include conventional large scale integrated (VLSI) circuits or gate arrays and existing semiconductors such as logic chips, transistors, or other discrete components. Modules can also be implemented with programmable hardware devices such as field programmable gate arrays, programmable array logic, programmable logic devices, and the like.

In each method embodiment of the present invention, the sequence numbers of the steps cannot be used to limit the sequence of the steps. For those skilled in the art, the successive changes to each step are also within the protection scope of the present invention.

The above is a preferred embodiment of the present disclosure, and it should be pointed out that those skilled in the art can also make several improvements and remodeling without deviating from the principle of the present disclosure. These improvements and remodeling are also possible. It should be regarded as the protection scope of the present disclosure.

### Industrial applicability

The method for implementing voice wake-up according to the embodiments of the disclosure includes that: a voice wake-up instruction input by a user is received, wake-up word identification and determination are performed on the voice wake-up instruction using a preset voice wake-up word to obtain a first determination result, the voice wake-up word may include voiceprint information; voiceprint determination is performed on the voice wake-up instruction using the voice wake-up word to obtain a second determination result; and the intelligent terminal is unlocked and waked up when the first determination result and the second determination result meet preset conditions. With the embodiments of the disclosure, the original two operations can be simplified into one operation, which thus it is possible to eliminate the operation of voiceprint unlocking after the intelligent terminal is waked up, which operation is a necessity before a user can use the intelligent terminal, thereby simplifying a process for the user to wake up and manipulate the intelligent terminal.

## Claims

1. A method for implementing voice wake-up, applied to an intelligent terminal, comprising:
receiving a voice wake-up instruction input by a user;
performing wake-up word identification and determination on the voice wake-up instruction using a preset voice wake-up word to obtain a first determination result, the voice wake-up word comprising voiceprint information;
performing voiceprint determination on the voice wake-up instruction using the voice wake-up word to obtain a second determination result; and
unlocking and waking up the intelligent terminal when the first determination result and the second determination result meet preset conditions.

2. The method for implementing voice wake-up according to claim 1, further comprising: before receiving the voice wake-up instruction input by the user,
performing a unity training recording of the voice wake-up word comprising the voiceprint information, and storing the voice wake-up word.

3. The method for implementing voice wake-up according to claim 2, further comprising: before performing the unity training recording of the voice wake-up word comprising the voiceprint information,
detecting noise in an environment in which the unity training recording is performed;
wherein performing the unity training recording of the voice wake-up word comprising the voiceprint information includes:
performing the unity training recording of the voice wake-up word comprising the voiceprint information when a volume of the noise is lower than a preset decibel value.

4. The method for implementing voice wake-up according to claim 2, wherein performing the unity training recording of the voice wake-up word comprising the voiceprint information includes:
performing a wake-up word training recording of the voice wake-up word and a voiceprint training recording of the voice wake-up word simultaneously, and determining recording results separately;
when a number of times that the voiceprint training recording is successful reaches n, and a number of times that the wake-up word training recording is successful is zero, restarting the unity training recording; or when a number of times that the wake-up word training recording is successful reaches m, and a number of times that the voiceprint training recording is successful is zero, restarting the unity training recording, where m and n are respectively an integer greater than one.

5. The method for implementing voice wake-up according to claim 2, wherein performing the unity training recording of the voice wake-up word comprising the voiceprint information includes:
performing a wake-up word training recording of the voice wake-up word and a voiceprint training recording of the voice wake-up word simultaneously, and determining recording results separately;
when a number of times that the wake-up word training recording is successful reaches m, and a number of times that the voiceprint training recording is successful is less then n, saving wake-up word training recording data, stopping the wake-up word training recording, and continuing to perform the voiceprint training recording; saving voiceprint training recording data when the number of times that the voiceprint training recording is successful reaches n, and finishing the unity training recording, where m and n are respectively an integer greater than one.

6. The method for implementing voice wake-up according to claim 2, wherein performing the unity training recording of the voice wake-up word comprising the voiceprint information includes:
performing a wake-up word training recording of the voice wake-up word and a voiceprint training recording of the voice wake-up word simultaneously, and determining recording results separately;
when a number of times that the voiceprint training recording is successful reaches n, and a number of times that the wake-up word training recording is successful is less than m, saving voiceprint training recording data, stopping the voiceprint training recording, and continuing to perform the wake-up word training recording; saving wake-up word training recording data when the number of times that the wake-up word training recording is successful reaches m, and finishing the unity training recording, where m and n are respectively an integer greater than one.

7. The method for implementing voice wake-up according to claim 2, wherein performing the unity training recording of the voice wake-up word comprising the voiceprint information includes:
performing a wake-up word training recording of the voice wake-up word and a voiceprint training recording of the voice wake-up word simultaneously, and determining recording results separately;
recording a number of times that both the wake-up word training recording and the voiceprint training recording are simultaneously successful; saving wake-up word training recording data and voiceprint training recording data when the number of times that both the wake-up word training recording and the voiceprint training recording are simultaneously successful reaches m, and finishing the unity training recording, where m is an integer greater than one.

8. A device for implementing voice wake-up, comprising:
a receiving module, arranged to receive a voice wake-up instruction input by a user;
a determining module, arranged to perform wake-up word identification and determination on the voice wake-up instruction using a preset voice wake-up word to obtain a first determination result, the voice wake-up word comprising voiceprint information, and perform voiceprint determination on the voice wake-up instruction using the voice wake-up word to obtain a second determination result; and
a processing module, arranged to unlock and wake up the intelligent terminal when the first determination result and the second determination result meet preset conditions.

9. The device for implementing voice wake-up according to claim 8, further comprising:
a recording training module, arranged to perform a unity training recording of the voice wake-up word comprising the voiceprint information; and
a voice chip, arranged to store the voice wake-up word.

10. The device for implementing voice wake-up according to claim 9, further comprising:
a recording processing module, arranged to detect noise in an environment in which the unity training recording is performed before performing the unity training recording of the voice wake-up word comprising the voiceprint information;
wherein the recording training module is specifically arranged to perform the unity training recording of the voice wake-up word comprising the voiceprint information when a volume of the noise is lower than a preset decibel value.

11. The device for implementing voice wake-up according to claim 9, wherein the recording training module comprises:
a concurrent recording sub-module, arranged to, during the unity training recording, control a left channel of the intelligent terminal to store wake-up word training recording data and control a right channel of the intelligent terminal to store voiceprint training recording data; or control a right channel of the intelligent terminal to store wake-up word training recording data and control a left channel of the intelligent terminal to store voiceprint training recording data.

12. An intelligent terminal, comprising the device for implementing voice wake-up according to any one of claims 8-11.

13. A computer storage medium having stored thereon computer instructions for executing the method for implementing voice wake-up according to any one of claims 1-7.
